# EUROPEAN PATENT APPLICATION

(11) **EP 1 336 811 A2**
(43) Date of publication of application: **20.08.2003**
(21) Application number: 03003168.6
(22) Date of filing: 18.02.2003
(51) Int. Cl.: F28F 3/02, F28D 9/00, B01J 19/24

(54) **Stacked heat exchanger**

(30) Priority: 19.02.2002 JP 2002041463; 27.03.2002 JP 2002088747
(71) Applicant: Calsonic Kansei Corporation, Tokyo 164-8602 (JP)
(72) Inventor: Yoshida, Hiroyuki, Nakano-ku, Tokyo 164-8602 (JP); Yoshioka, Hiroki, Nakano-ku, Tokyo 164-8602 (JP)
(74) Representative: Grünecker, Kinkeldey, Stockmair & Schwanhäusser Anwaltssozietät

(57) **Abstract**

In each space 41, a plurality of outer fins 43 are stacked to be arranged, and partition boards 45 are individually arranged between the outer fins 43. At least on edges of each partition board 45 on sides of tank formation portions 37, bent portions 47 and 49 bent in the stacking direction of the tube sheets 29 are formed. Moreover, the position in the stacking direction of an edge 61a of a partition board 61 on a side of the tank formation portions 37, 37A, or 37B is different from the position in the stacking direction of a joint portion of the tank formation potions 37, 37A, or 37B, respectively.

## Description

### BACKGROUND OF THE INVENTION

### 1. Field of the Invention

The present invention relates to a stacked heat exchanger including a plurality of plate-shaped tube sheets stacked with fluid passages formed inside thereof.

### 2. Description of the Related Art

Recently, automobiles using fuel cells have been developed. In such development of the fuel cell automobiles, for example, a methanol reformer for efficiently obtaining hydrogen from methanol has been developed.

Reformed gas from the methanol reformer abounds in hydrogen gas but contains undesirable carbon monoxide(CO). Therefore, it is necessary to reduce carbon monoxide to a nonpoisonous concentration.

### SUMMARY OF THE INVENTION

FIG. 1 schematically shows a carbon monoxide removal apparatus which is currently under development. In the carbon monoxide removal apparatus, two preferential oxidation reactors(PROX) 2 are connected in series to a down stream side of a preferential oxidation reactor(PROX) 1 as a heat exchanger with ducts D individually interposed therebetween.

On an inlet side of each of the two preferential oxidation reactors 2, an oxide supply pipe 3 is opened.

FIG. 2 shows one of the preferential oxidation reactors 2 in detail. In the preferential oxidation reactor 2, a core portion 5 is formed by stacking a plurality of plate-shaped tube sheets 4 with cooling water channels formed therein.

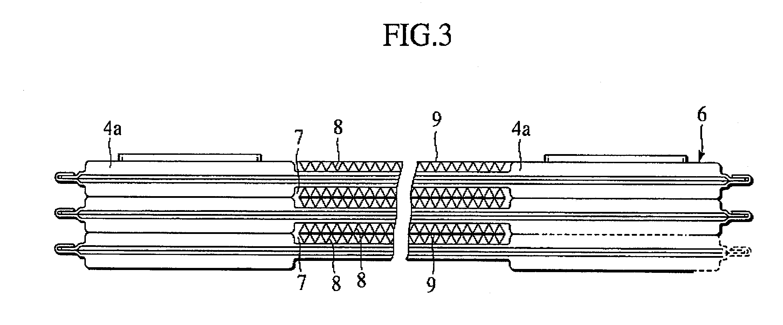

On both sides of each tube sheet 4, as shown in FIG. 3, tank formation portions 4a are projectively formed. The tank formation portions 4a are joined each other to form tank portions 6.

Between the tube sheets 4, spaces 7 are formed by the tank formation portions 4a. Corrugated outer fins 8 are arranged in each of the spaces 7.

In each space 7, the two outer fins 8 are stacked in two layers with a partition board 9 interposed therebetween. The outer fins 8 and the partition board 9 support a catalyst for efficient oxidation of carbon monoxide.

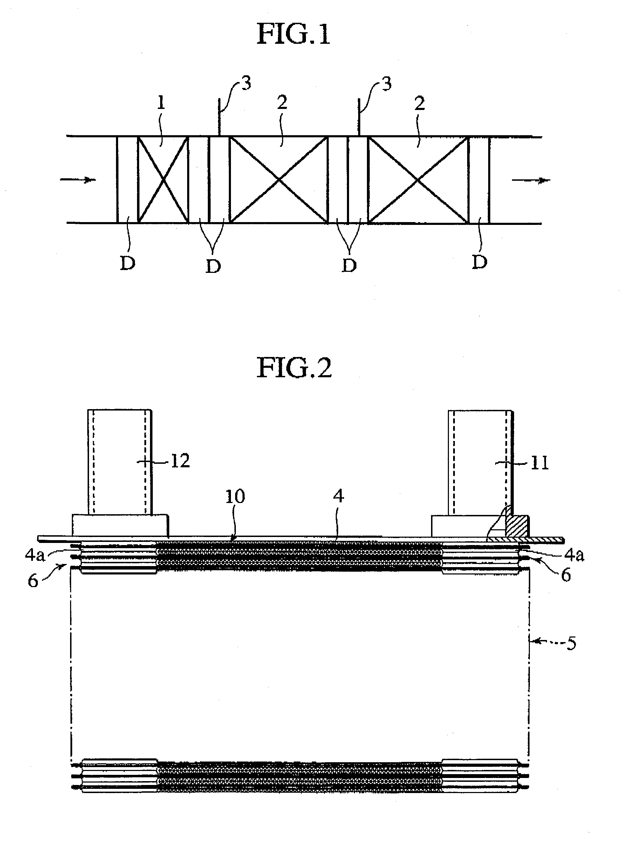

As shown in FIG. 2, a side plate 10 is arranged on an upper side of the core portion 5 in a stacking direction. In the side plate 10, an inlet pipe 11 for cooling water and an outlet pipe 12 therefor are opened.

Each preferential oxidation reactor 2 is accommodated in a heat treatment furnace in a state that the members are assembled, and the members are soldered to each other.

In the above-described reactor 2, reformed gas from the methanol reformer is introduced into each of the spaces 7. while passing through the space 7, the reformed gas is efficiently oxidized by the catalyst supported by the outer fins 8 and the partition board 9, which are arranged in the space 7.

The reformed gas passing through the outer fins 8 and the partition board 9 is cooled by the cooling water flown in the tube sheets 4, and more efficient oxidation can be performed.

In the above-described preferential oxidation reactor 2, the two outer fins 8 are stacked with the partition board 9 interposed therebetween in each space 7. Accordingly, compared with the preferential oxidation reactor with one outer fin provided in each space, an area supporting the catalyst can be increased, and thus carbon monoxide can be efficiently oxidized.

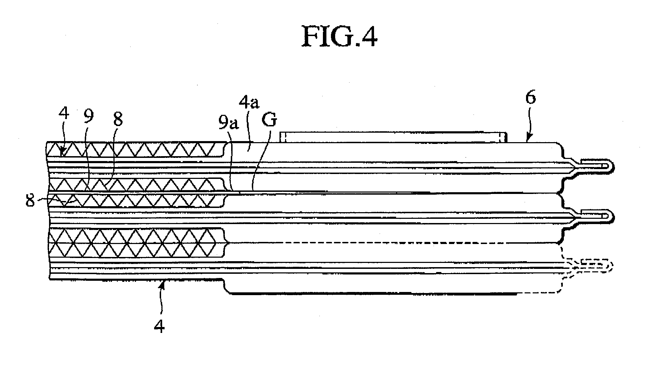

However, in such a preferential oxidation reactor, since the two outer fins 8 are stacked with the partition board 9 interposed therebetween in each space 7, as shown in FIG. 4, when the core portion 5 is assembled, an edge 9a of each partition board 9 is caught between the tank formation portions 4a of the tube sheets 4, and a very small gap G is formed between the tank formation portions 4a in some cases.

It is an object of the present invention to provide a stacked heat exchanger capable of easily and surely preventing the partition board arranged between the outer fins from being caught between the tank formation portions of the tube sheets.

A stacked heat exchanger according to a first aspect of the present invention includes; a plurality of plate-shaped tube sheets stacked, each including a fluid passage formed inside; a plurality of tank formation portions, which are mutually joined to each of the plurality of tube sheets and formed to be projected in a stacking direction of the plurality of tube sheets; a plurality of corrugated outer fins stacked to be arranged in each of spaces formed between the plurality of tube sheets; and a partition board arranged between the plurality of outer fins. A bent portion is formed at least on an edge of the partition board on a side of the plurality of tank formation portions, and the bent portion is bent in a stacking direction of the plurality of tube sheets.

In the stacked heat exchanger, the bent portion may be formed on each of both edges of the partition board and include a first bent portion and a second bent portion, which are bent in directions opposite to each other.

A stacked heat exchanger according to a second aspect of the present invention includes: a plurality of plate-shaped tube sheets stacked, each including a fluid passage formed inside; a plurality of tank formation portions, which are mutually joined to each of the plurality of tube sheets and formed to be projected in a stacking direction of the plurality of the sheets; a plurality of corrugated outer fins stacked to be arranged in each of spaces formed between the plurality of tube sheets; and a partition board arranged between the plurality of outer fins. A position of an edge of the partition board on a side of the plurality of tank formation portions is set to be different from a position in the stacking direction of a joint portion of the tank formation portions.

In the stacked heat exchanger, projected heights of the tank formation portions joined to each other may be different from each other.

In the stacked heat exchanger, fin heights of the plurality of outer fins stacked in each of the spaces are different from each other.

In the stacked heat exchanger, the number of the plurality of outer fins that are stacked in each of the spaces may be set to an odd number.

In the stacked heat exchanger, the plurality of outer fins and the partition board support a catalyst.

In the stacked heat exchanger of the first aspect, the plurality of corrugated outer fins are stacked to be arranged with the partition board interposed therebetween in each of the spaces formed between the tube sheets. Fluid flowing through the space is brought into contact with the outer fins and the partition board.

The bent portion bent in the staking direction of the tube sheets is formed at least on the edge of the partition board on the side of the tank formation portions. The bent portion prevents the partition board from being caught between the tank formation portions of the tube sheets.

In the above-described stacked heat exchanger, the bent portion bent in the stacking direction of the tube sheets is formed on each of both edges of the partition board, and the outer fins are arranged between the bent portions.

The outer fins to be arranged in both sides of the partition board are individually located and positioned between first bent portions and second bent portions, the first bent portions and the second bent portions being bent in directions opposite to each other. Accordingly, the outer fins can be surely and easily arranged on the both sides of the partition board.

In the stacked heat exchanger of the second aspect, the plurality of corrugated outer fins are stacked to be arranged with the partition board interposed therebetween in each of the spaces formed between the tube sheets. Fluid flowing through the space is brought into contact with the outer fins and the partition board.

Moreover, the position in the stacking direction of the edge of the partition board on the side of the tank formation portions is set to be different from the position in the stacking direction of the joint portion of the tank formation portions. Accordingly, the partition board is prevented to be caught between the tank formation portions of the tube sheets.

In the stacked heat exchanger, the position in the stacking direction of the edge of the partition board on the side of the tank formation portions is set to be different from the position in the stacking direction of the joint portion of the tank formation portions by setting the projected heights of the tank formation portions that are joined to each other to be different from each other.

In the stacked heat exchanger, the position in the stacking direction of the edge of the partition board on the side of the tank formation portions is set to be different from the position in the stacking direction of the joint portion of the tank formation portions by setting the fin heights of the plurality of outer fins stacked in the space to be different from each other.

In the stacked heat exchanger, the position in the stacking direction of the edge of the partition board on the side of the tank formation portions is set to be different from the position in the stacking direction of the joint portion of the tank formation portions by setting the number of the plurality of outer fins stacked in the space to an odd number.

In the stacked heat exchanger, the outer fins and the partition board support a catalyst for oxidation of carbon monoxide of reformed gas from a methanol reformer.

### BRIEF DESCRIPTION OF THE DRAWINGS

FIG. 1 is an explanatory view schematically showing a carbon monoxide removal apparatus using preferential oxidation reactors.
FIG. 2 is a front view showing the preferential oxidation reactor in detail.
FIG. 3 is a cross-sectional view showing a core portion of FIG. 2 in detail.
FIG. 4 is an explanatory view showing a state that an edge of one of partition boards is caught between tank formation portions of tube sheets of FIG. 3.

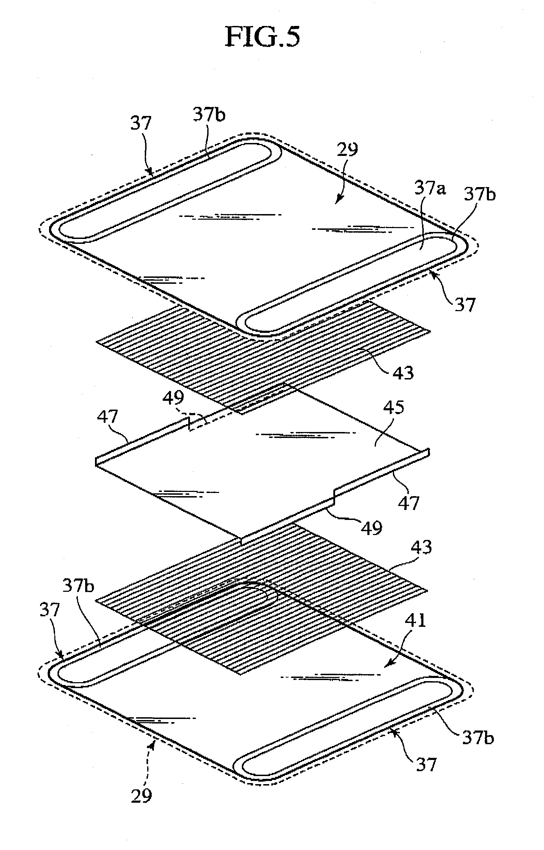

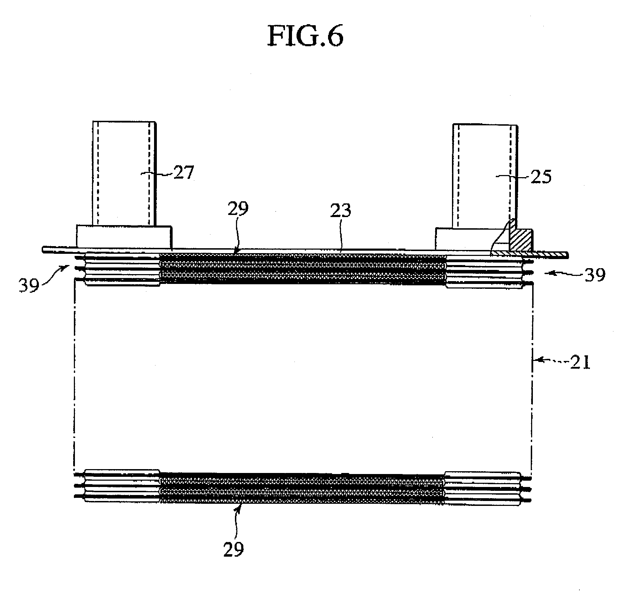

FIG. 5 is an exploded perspective view showing a main portion of a stacked heat exchanger of FIG. 6 in detail.
FIG. 6 is a front view showing a first embodiment of the stacked heat exchanger according to the present invention.

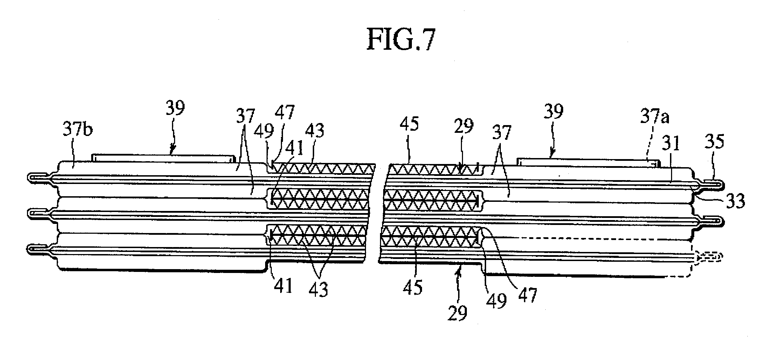

FIG. 7 is a cross-sectional view showing a core portion of the stacked heat exchanger of FIG. 6.

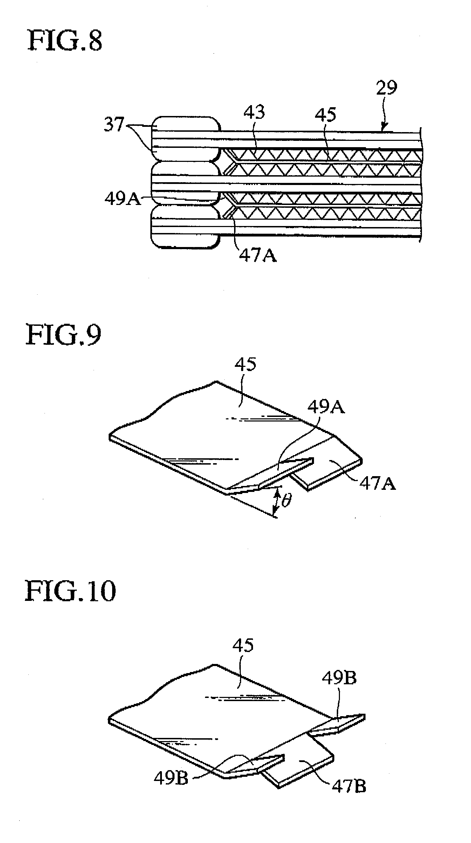

FIG. 8 is a front view showing a main portion of a second embodiment of the stacked heat exchanger according to the present invention.
FIG. 9 is a perspective view showing a bent portion formed in the partition board of FIG. 8.
FIG. 10 is a perspective view showing another example of the bent portion formed in the partition board.

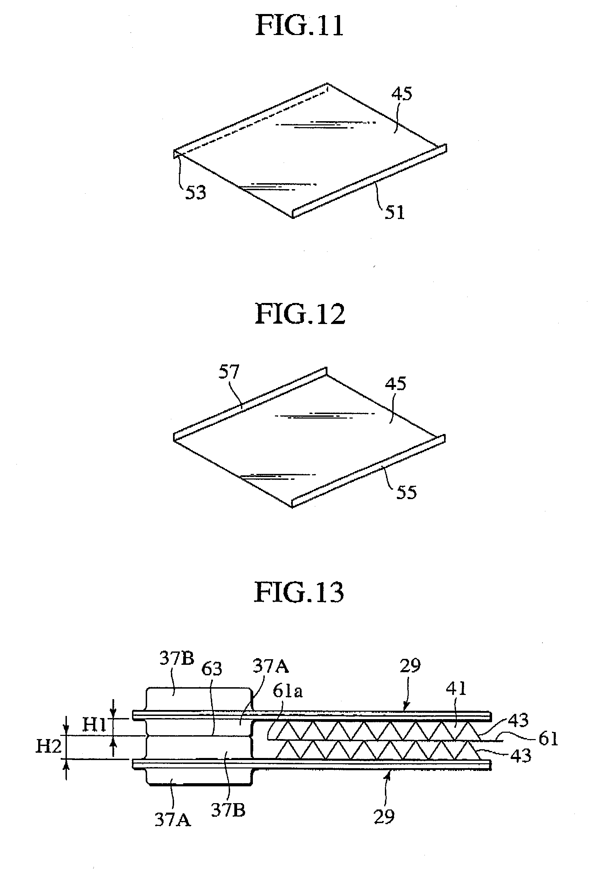

FIG. 11 is an explanatory view showing another example of the bent portion formed in the partition board.
FIG. 12 is a perspective view showing another example of the bent portion formed in the partition board.
FIG. 13 is a front view showing a main portion of a third embodiment of the stacked heat exchanger according to the present invention.

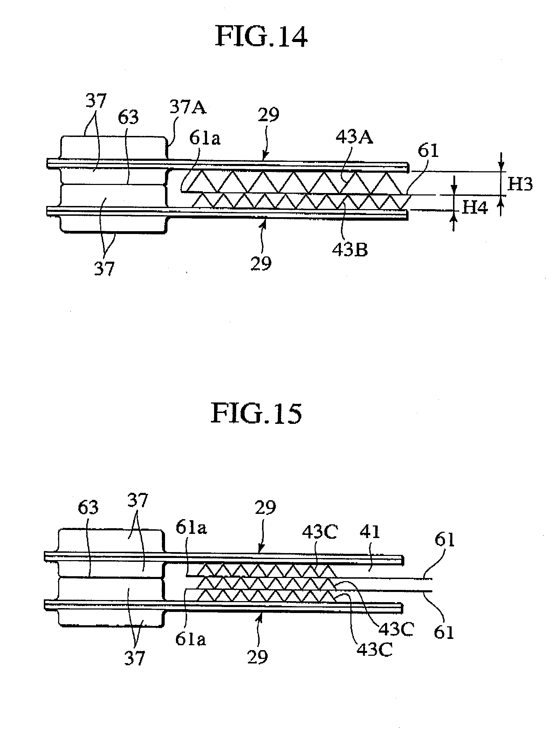

FIG. 14 is a front view showing a main portion of a fourth embodiment of the stacked heat exchanger according to the present invention.
FIG. 15 is a front view showing a main portion of a fifth embodiment of the stacked heat exchanger according to the present invention.

### DETAILED DESCRIPTION OF PREFERRED EMBODIMENTS

A description will be made of embodiments shown in the drawings in detail below.

### (First embodiment)

FIG. 5 shows a main portion of FIG. 6 in detail, and FIG. 6 shows a first embodiment of a stacked heat exchanger according to the present invention.

In this embodiment, the present invention is applied to a preferential oxidation reactor(PROX).

The stacked heat exchanger shown in FIG. 6 is composed by arranging a side plate 23 on an upper side of a core portion 21.

On the side plate 23, an inlet pipe 25 for cooling water and an outlet pipe 27 therefor are opened.

The stacked heat exchanger is formed substantially in a cuboid. Reformed gas flown into the core portion 21 from the front of the paper of FIG. 6 is passed through the core portion 21 and then flown out from the back of the paper.

The core portion 21 is formed by stacking a plurality of plate-shaped tube sheets 29 with cooling water passages formed inside.

As shown in FIG. 7, each of the tube sheets 29 is composed by arranging a not-shown inner fin made of, for example, aluminum, between a first sheet member 31 and a second sheet member 33 made of, for example, aluminum.

On an outer periphery of the first sheet member 31, an outer periphery of the second sheet member 33 is fixed with caulking to form a caulked portion 35.

On both sides of each tube sheet, tank formation portions 37 are projectively formed as shown in FIG. 7.

The tank formation portions 37 are projected from both faces of the tube sheet 29 toward stacking directions.

The tank formation portions 37 are individually provided with a connecting hole 37a for flowing the cooling water. Each joint surface 37b is flatly formed around the connecting hole 37a.

The joint surfaces 37b of the tank formation portions 37 adjacent to each other are joined to each other by soldering to form tank portions 39.

One of the tank portions 39 is connected to the inlet pipe 25, and the other is connected to the outlet pipe 27.

Between the tube sheets 29, spaces 41 are formed by the tank formation portions 37. In each of the spaces 41, corrugated outer fins 43 made of, for example, aluminum, are arranged.

In the space 41, the outer fins 43 are stacked in two layers with a partition board 45 made of, for example, aluminum, interposed therebetween.

The outer fins 43 and the partition board 45 support a catalyst for efficient oxidation of carbon monoxide from the reformed gas.

In this embodiment, as shown in FIG. 5, in edges of the rectangular partition board 45 on sides of the tank formation portions 37, bent portions bent in the stacking directions of the tube sheets 29 are formed.

Each of the bent portions is divided at a middle of the edge of the partition board 45 into a first bent portion 47 and a second bent portion 49. The first bent portion 47 and the second bent portion 49 are bent in the directions opposite to each other.

The outer fins 43 arranged on the both sides of the partition board 45 are individually situated and positioned between the first bent portions 47 and between the second bent portions 49, the first bent portions 47 and the second bent portions 49 being bent in the directions opposite to each other.

In this embodiment, the first bent portions 47 and the second bent portions 49 are bent at a substantially right angle with respect to the partition board 45.

In the above-described stacked heat exchanger, the respective members are soldered to each other by accommodating the members into the heat treatment furnace for baking in a state that the members are assembled.

In the above-described stacked heat exchanger, the reformed gas from the methanol reformer is introduced into each space 41. While passing through the space 41, the reformed gas is efficiently oxidized by the catalyst supported by the outer fins 43 and the partition board 45, which are arranged in the space 41.

Moreover, the reformed gas passing through the outer fins 43 and the partition board 45 is cooled by the cooling water flowing inside the tube sheets 29, and more efficient oxidation is preformed.

In the above-described stacked heat exchanger, the outer fins 43 are stacked in two layers with the partition board 45 interposed therebetween in each space 41, and the outer fins 43 and the partition board 45 support the catalyst. Accordingly, compared with a stacked heat exchanger with one outer fin provided in the space, an area supporting the catalyst can be increased, and thus carbon monoxide can be oxidized more efficiently.

Furthermore, in the above-described heat exchanger, the bent portions 47 and 49, which are bent in the stacking directions of the tube sheets 29, are formed at least on the edges of the partition board 45 on the sides of the tank formation portions 37. Accordingly, the possibility that the partition board 45 arranged between the outer fins 43 is caught between the tank formation portions 37 of the tube sheets 29 can be easily and surely eliminated.

In the above-described stacked heat exchanger, the outer fins 43 arranged on the both sides of the partition board 45 are individually situated and positioned between the first bent portions 47 and between the second bent portions 49. Each of the first bent portions 47 and each of the second bent portions 49 are separated at the middle of the edge and bent in the directions opposite to each other. Accordingly, the outer fins 43 are surely and easily arranged on the both sides of the partition board 45.

### (Second embodiment)

FIG. 8 shows a main portion of a second embodiment of the stacked heat exchanger according to the present invention. In this embodiment, as shown in FIG. 9, a first bent portion 47A and a second bent portion 49A are formed on each of both sides of the rectangular partition board 45.

The first bent portion 47A and the second bent portion 49A are bent in the directions opposite to each other by an angle θ smaller than 90 degrees, for example, about 45 degrees, with respect to the partition board 45.

Note that the members in this embodiment similar to those in the first embodiment are given the same reference numerals and detailed description thereof is omitted.

In this embodiment, the effects similar to those of the first embodiment can be obtained. However, in this embodiment, the bent angle of the first bent portion 47A and the second bent portion 49A is set to the angle θ smaller than 90 degrees, for example, about 45 degrees. Accordingly, as shown in FIG. 8, each of the outer fins 43 is only positioned in a wave direction thereof by the first bent portion 47A or the second bent portion 49A. The edge of the outer fin 43 is prevented from abutting directly on the first bent portion 47A or the second bent portion 49A to be restricted.

Noted that, in this embodiment, on both sides of a first bent portion 47B, second bent portions 49B bent in the opposite direction to the first bent portion 47B may be formed as shown in FIG. 10.

In the above-described first and second embodiments, the description has been made of the example that the two outer fins 43 are stacked in each space 41. However, the present invention is not limited to such embodiments, and the present invention can be applied to, for example, a case that an even number of outer fins 43, such as four outer fins 43, are stacked in each space 41.

Furthermore, in the above-described first and second embodiments, the description has been made of the example that the bent portions 47 and 49 are formed on the both edges of the partition board 45. However, the present invention is not limited to such embodiments. For example, when the tank formation portion is formed on only one side of each tube sheet, the bent portion may be formed at least on the side where the tank formation portion is formed.

In the above-described first and second embodiments, the description has been made of the example that the bent portion formed in each edge of the partition board 45 is constituted of the first bent portion 47 or 47A and the second bent portion 49 or 49A, which are separated in the edge and bent to the opposite directions to each other. However, the present invention is not limited to such embodiments. For example, as shown in FIG. 11, the both edges of the partition board 45 may be bent to the directions opposite to each other without dividing each of the edges to form bent portions 51 and 53. Moreover, bent portions 55 and 57 may be formed by bending the edges of the partition board 45 to the same direction as shown in FIG. 12.

### (Third embodiment)

FIG. 13 shows a main portion of a third embodiment of the stacked heat exchanger according to the present invention. In this embodiment, projected heights of tank formation portions 37A and 37B which are joined to each other are set to heights H1 an H2 different from each other.

Specifically, in this embodiment, the height H1 of the tank formation portion 37A projected from the each tube sheet 29 downward in the drawing is set to be smaller than the height H2 of the tank formation portion 37B projected from the each tube sheet 29 upward in the drawing.

For example, the height H1 of the tank formation portion 37A projected downward is set to 1 mm, and the height H2 of the tank formation portion 37B projected upward is set to 2 mm.

Meanwhile, in the space 41, the outer fins 43 are stacked in two layers. Between the outer fins 43, for example, a partition board 61 having a wall thickness same as that of the outer fins 43 is arranged.

The upper and lower outer fins 43 have a same height.

The partition board 61 is completely flat with no bent portion formed in the edges.

Accordingly, the position in the stacking direction of an edge portion 61a of the partition board 61 on the side of the tank formation portions 37A and 37B is different from the position in the stacking direction of a joint portion 63 of the tank formation portions 37A and 37B.

Note that the members in this embodiment similar to those in the first embodiment are given the same reference numerals and detailed description thereof is omitted.

In this embodiment, the position in the stacking direction of the edge portion 61a of the partition board 61 on the side of the tank formation portions 37A and 37B is set to be different from the position in the stacking direction of the joint portion 63 of the tank formation portions 37A and 37B. Accordingly, the possibility that the partition board 61 arranged between the outer fins 43 may be caught between the tank formation portions 37A and 37B of the tube sheets 29 can be easily and surely eliminated.

Specifically, in this embodiment, when the partition board 61 moves toward the side of the tank formation portions 37A and 37B, the partition board 61 hits against a side face of the tank formation portion 37B projected upward and then stops. Accordingly, the possibility that the partition board 61 may be caught between the tank formation portions 37A and 37B can be eliminated.

In this embodiment. the projected heights of the tank formation portions 37A and 37B joined to each other are set to the height H1 and H2 different from each other. Accordingly, the position in the stacking direction of the edge portion 61a of the partition board 61 on the side of the tank formation portions 37A and 37B can be easily and surely set to be different from the position in the stacking direction of the joint portion 63 of the tank formation portions 37A and 37B.

In this embodiment, the description has been made of the example that the difference between the height H1 of the tank formation portion 37A projected downward and the height H2 of the tank formation portion 37B projected upward is set to 1 mm, but the difference can be set to, for example, about 0.3 mm to 2 mm.

### (Fourth embodiment)

PIG. 14 shows a main portion of a fourth embodiment of the stacked heat exchanger according to the present invention. In this embodiment, fin heights of outer fins 43A and 43B stacked in two layers in the space 41 are set to height H3 and H4 different from each other.

Specifically, in this embodiment, the height H3 of the outer fin 43A arranged in the upper layer of the space 41 in the drawing is set to be larger than the height H4 of the outer fin 43B arranged in the lower layer in the drawing.

For example, the height H3 of the outer fin 43A in the upper layer is set to 2 mm, and the height H4 of the outer fin 43B in the lower layer is set to 1 mm.

Between the outer fins 43A and 43B, the partition board 61 is arranged.

Meanwhile, the height of the tank formation portion 37 projected downward is the same as that of the tank formation portion 37 projected upward.

Accordingly, the position in the stacking direction of the edge portion 61a of the partition board 61 on the side of the tank formation portions 37 is different from the position in the stacking direction of the joint portion 63 of the tank formation portions 37.

Note that the members in this embodiment similar to those in the first embodiment are given the same reference numerals and detailed description thereof is omitted.

In this embodiment, the fin heights of the outer fins 43A and 43B stacked in a plurality of layers in the space 41 are set to the height H3 and H4 different from each other. Accordingly, the possibility that the partition board 61 arranged between the outer fins 43A and 43B may be caught between the tank formation portions 37 of the tube sheets 29 can be easily and surely eliminated.

Specifically, in this embodiment, when the partition board 61 moves toward the side of the tank formation portions 37, the partition board 61 hits against a side face of the tank formation portion 37 projected upward and then stops. Accordingly, the possibility that the partition board 61 may be caught between the tank formation portions 37 can be eliminated.

In this embodiment, the fin height H3 and H4 of the outer fins 43A and 43B stacked in the space 41 are set to the heights H3 and H4 different from each other. Accordingly, the position in the stacking direction of the edge portion 61a of the partition board 61 on the side of the tank formation portions 37 can be easily and surely set to be different from the position in the stacking direction of the joint portion 63 of the tank formation portions 37.

In this embodiment, the description has been made of the example that the difference between the height H3 of the outer fin 43A in the upper layer and the height H4 of the outer fin 43B in the lower layer set to 1 mm, but the difference can be set to, for example, about 0.3 mm to 2 mm.

### (Fifth embodiment)

Fig. 15 shows a main portion of a fifth embodiment of the stacked heat exchanger according to the present invention. In this embodiment, outer fins 43C are stacked in a plurality of layers in the space 41, and the number of layers is set to an odd number.

Specifically, in this embodiment, three outer fins 43C are arranged in the space 41.

The outer fins 43C have a same height.

Between the outer fins 43C, the partition boards 61 are individually arranged.

Meanwhile, the height of the tank formation portion 37 projected downward is the same as that of the tank formation portion 37 projected upward.

Accordingly, the position in the stacking direction of the edge portion 61a of the partition board 61 on the side of the tank formation portions 37 can be set to be different from the position in the stacking direction of the joint portion 63 of the tank formation portions 37.

Note that, in this embodiment, the similar members to those in the first embodiment are given the same reference numerals and detailed description thereof is omitted.

In this embodiment, the height of the tank formation portion 37 projected downward is set to the same height as the tank formation portion 37 projected upward, and the outer fins 41C are arranged in three layers in the space 41. Accordingly, the possibility that the partition boards 61 individually arranged between the outer fins 43 may be caught between the tank formation portions 37 of the tube sheets 29 can be easily and surely eliminated.

Specifically, in this embodiment, when each partition board 61 moves toward the side of the tank formation portions 37, the partition board 61 hits against the side face of the tank formation portion 37 projected upward or the tank formation portion 37 projected downward and then stops. Accordingly, the possibility that the partition boards 61 may be caught between the tank formation portions 37 can be eliminated.

In this embodiment, since the outer fins 43c are arranged in the odd number of layers in the space 41, the positions in the stacking direction of the edge portions 61a of the partition boards 61 on the side of the tank formation portions 37 can be easily and surely set to be different from the position in the stacking direction of the joint portion 63 of the tank formation portions 37.

In the above-described embodiments, the description has been made of the examples that the present invention is applied to the stacked heat exchanger composed of the preferential oxidation reactors(PROX). However, the present invention is not limited to such embodiments, and the present invention can be widely applied to stacked heat exchangers such as an evaporator for fuel evaporation constituting a system for fuel cells and an evaporator for air conditioning of an automobile.

In the above-described embodiments, the description has been made of the example that the tank formation portions 37 are formed on the both sides of each tube sheet 29 so as to be opposite to each other. However, the present invention is not limited to such embodiments. For example, the present invention can be applied to the stacked heat exchanger including a tank formation portion only on one side of each tube sheet.

## Claims

1. A stacked heat exchanger, comprising:
a plurality of plate-shaped tube sheets stacked, each including a fluid passage formed inside;
a plurality of tank formation portions, which are mutually joined with each of said plurality of tube sheets and formed to be projected in a stacking direction of said plurality of tube sheets;
a plurality of corrugated outer fins stacked to be arranged in each of spaces formed between said plurality of tube sheets; and
a partition board arranged between said plurality of outer fins, wherein
a bent portion is formed at least on an edge of said partition board on a side of said plurality of tank formation portions, and the bent portion is bent in a stacking direction of said plurality of tube sheets.

2. The stacked heat exchanger according to claim 1. wherein
said bent portion includes a first bent portion and a second bent portion formed on each of both edges of the partition board, the first bent portion and the second bent portion being bent in directions opposite to each other.

3. A stacked heat exchanger, comprising:
a plurality of plate-shaped tube sheets stacked, each including a fluid passage formed inside;
a plurality of tank formation portions, which are mutually joined with each of said plurality of tube sheets and formed to be projected in a stacking direction of said plurality of tube sheets;
a plurality of corrugated outer fins stacked to be arranged in each of spaces formed between said plurality of tube sheets; and
a partition board arranged between said plurality of outer fins, wherein
a position of an edge of said partition board on a side of said plurality of tank formation portions is set to be different from a position in the stacking direction of a joint portion of said tank formation portions.

4. The stacked heat exchanger according to claim 3, wherein
projected heights of the tank formation portions joined to each other are different from each other.

5. The stacked heat exchanger according to claim 3, wherein
fin heights of said plurality of outer fins stacked in each of the spaces are different from each other.

6. The stacked heat exchanger according to claim 3, wherein
the number of said plurality of outer fins that are stacked in each of the spaces is set to an odd number.

7. The stacked heat exchanger according to claim 1, wherein
said plurality of outer fins and said partition board carry a catalyst.
